# EUROPÄISCHE PATENTSCHRIFT

(11) **EP 2 837 834 B1**
(45) Veröffentlichungstag und Bekanntmachung des Hinweises auf die Patenterteilung: **11.10.2017**
(21) Anmeldenummer: 14176114.8
(22) Anmeldetag: 08.07.2014
(51) Int. Cl.: F15B 13/044, F15B 13/04, F16K 1/44, F16K 11/10

(54) **Hydrostatisches Antriebssystem mit Freigabeventil**
Hydrostatic drive system with release valve
Système d'entraînement hydrostatique avec soupape de décharge

(30) Priorität: 22.07.2013 DE 102013107806; 02.08.2013 DE 102013108349
(43) Veröffentlichungstag der Anmeldung: 18.02.2015
(73) Patentinhaber: Linde Hydraulics GmbH & Co. KG, 63743 Aschaffenburg (DE)
(72) Erfinder: Kraft, Wolfgang, Dr., 63762 Ringheim (DE)
(74) Vertreter: Patentship Patentanwaltsgesellschaft mbH

(56) Entgegenhaltungen:
- DE-A1- 10 224 731
- DE-B- 1 292 493
- DE-B4- 10 308 910

## Beschreibung

Die Erfindung betrifft ein hydrostatisches Antriebssystem mit zumindest einem Steuerwegeventil zur Steuerung eines Verbrauchers, das von einem Steuerdruck betätigbar ist, und einer Förderstromregeleinrichtung, die von einem Lastdruck gesteuert ist, und mit einem Freigabeventil, wobei das Freigabeventil die Beaufschlagung des Steuerwegeventils mit dem Steuerdruck und die Beaufschlagung der Förderstromregeleinrichtung mit dem Lastdruck steuert, wobei das Freigabeventil einen Steuerdruckanschluss und einen Lastdruckanschluss ansteuert, wobei das Freigabeventil eine Funktionsstellung und eine Entlastungsstellung aufweist.

Derartige Freigabeventile werden in Load-Sensing gesteuerten Antriebssystemen von Arbeitsmaschinen, beispielsweise Flurförderzeugen, Baumaschinen, Forstmaschinen, Landmaschinen oder Kommunalmaschinen, als Arbeitshydraulik verwendet. Das Freigabeventil dient zur Freigabe der Funktionen der die Verbraucher der Arbeitshydraulik steuernden Steuerwegeventile und ist darüber hinaus vorgesehen, um bei einer Störung, einer Fehlfunktion oder einem Defekt des Antriebssystems einen Betrieb der Verbraucher zu verhindern und somit gefährliche Betriebszustände zu vermeiden.

Ein Freigabeventil für ein gattungsgemäßes hydrostatisches Antriebssystem ist aus der DE 103 08 910 B4 bekannt. Zur Freigabe der Funktionen der die Verbraucher der Arbeitshydraulik steuernden Steuerwegeventile wird das Freigabeventil durch eine Bestromung eines Elektromagneten in eine Funktionsstellung betätigt. Der Betätigungsstößel des Elektromagneten verschließt hierbei eine Steueröffnung an der Stirnseite des Ventilschiebers des als Schieberventil ausgebildeten Freigabeventils und verschiebt den Ventilschieber entgegen der Kraft einer Feder an einen Endanschlag in die Funktionsstellung. Der Ventilschieber ist in einer Aufnahmebohrung längsverschiebbar, an die ein Anschluss einer Lastdruckmeldezweigleitung, ein Anschluss eines mit einer Druckmittelquelle verbundenen Abschnitts einer Steuerdruckversorgungsleitung und ein Anschluss eines zu Vorsteuerventilen geführten Abschnittes der Steuerdruckversorgungsleitung angeschlossen ist. Mit den Vorsteuerventilen werden die Steuerwegeventile der Verbraucher der Arbeitshydraulik betätigt. In der Funktionsstellung wird über eine erste Steuerausnehmung an dem Ventilschieber die Steuerdruckversorgungsleitung geöffnet und ein Steuerdruck zu den Vorsteuerventilen für die Betätigung der Steuerwegeventile der Arbeitshydraulik geführt und über eine zweite Steuerausnehmung die Lastdruckmeldezweigleitung abgesperrt, wodurch der in einer Lastdruckmeldeleitung anstehende Lastdruck der angesteuerten Verbraucher an eine Förderstromregeleinrichtung des Antriebssystems gemeldet wird. Bei unbetätigtem Elektromagnet geht der Ventilschieber des Freigabeventils in eine Entlastungsstellung, in der über die erste Steuerausnehmung die Verbindung der Vorsteuerventile mit der Steuerdruckversorgungsleitung abgesperrt und über die zweite Steuerausnehmung die Lastdruckmeldezweigleitung zum Behälter entlastet ist.

Das aus der DE 103 08 910 B4 bekannte Freigabeventil ist weiterhin mit einer Sicherheitsfunktion versehen, bei der bei einem verklemmenden Ventilschieber über eine Längsbohrung in dem Ventilschieber und die durch Abheben des Betätigungsstößels des Elektromagneten von der Stirnseite des Ventilschiebers aufgesteuerte Steueröffnung an der Stirnseite des Ventilschiebers der die Vorsteuerventile versorgende Steuerdruck zu einem Behälter entlastet wird.

Bei einem als Schieberventil ausgebildeten Freigabeventil ist jedoch nachteilig, dass sich aufgrund von Schmutz die Laufeigenschaften des Ventilschiebers in der Aufnahmebohrung während der Lebensdauer verschlechtern können. Ein weitere Nachteil besteht darin, dass die Spaltmaße zwischen dem Ventilschieber, der Gehäusebohrung und den Anschlüssen an der Aufnahmebohrung sehr klein ausgeführt werden müssen, um die Leckagen des in der Lastdruckmeldezweigleitung anstehenden Lastdruckes des Antriebssystems gering zu halten. Durch Verschleiß aufgrund von Schmutz können sich an dem Ventilschieber bzw. der Aufnahmebohrung des Ventilschiebers im Bereich des Anschlusses der Lastdruckmeldezweigleitung die Spaltmaße und damit die Leckagen des Lastdruckes vergrößern. Eine erhöhte Leckage des Lastdruckes hat zur Folge, dass über die Lebensdauer der maximal gewünschte Systemdruck des Load-Sensing-Antriebssystems, der von dem Lastdruck abhängt, nicht mehr erreicht wird, da sich der Lastdruck durch die Leckage an dem Freigabeventil verringert. Das Absinken des maximalen Systemdruckes aufgrund der Leckagen des Lastdruckes an dem Freigabeventil führt dazu, dass an den Verbrauchern geringere Kräfte anstehen und sich die Leistungsfähigkeit der Arbeitshydraulik der Arbeitsmaschine verringert.

Ein weiterer Nachteil des aus der DE 103 08 910 B4 bekannten Freigabeventils besteht darin, dass bei einem in der Funktionsstellung verklemmenden Ventilschieber zwar über die Sicherheitsfunktion der Steuerdruck für die Betätigung der die Steuerwegeventile betätigenden Vorsteuerventile zum Behälter abgebaut werden kann, der Lastdruck und somit der von einer Pumpe gelieferte Förderdruck jedoch bestehen bleibt. Bei dem aus DE 103 08 910 B4 bekannten Freigabeventil gibt es für diesen Fall eines verklemmenden Ventilschiebers keine Stellkraft, die den Ventilschieber von der Funktionsstellung in eine Entlastungsstellung betätigt, um eine Entlastung des am Lastdruckanschluss anstehenden Lastdruckes zu erzielen.

Die DE 1 292 493 B offenbart ein Hydrauliksystem mit vorgesteuerten Wegeventil, bei dem ein als Sitzventil ausgebildetes Freigabeventil den Vorsteuerdruck des Wegeventils aus dem Förderdruck der Pumpe erzeugt. Das Sitzventil verbindet in einer Öffnungsstellung die Förderleitung der Pumpe zum Behälter. Die Federseite des Sitzventils ist über ein Maximaldruck-Druckbegrenzungsventil zum Behälter abgesichert. Wenn ein Vorsteuerventil des Wegeventils nicht betätigt ist, ist das Sitzventil geöffnet, so dass die Pumpe im drucklosen Umlauf fördert (Figur 1). Wird das Vorsteuerventil des Wegeventils betätigt, schließt das Sitzventil (Figur 2). Sobald der von dem Wegeventil gesteuerte Verbraucher die Endstellung erreicht, öffnet das Maximaldruck-Druckbegrenzungsventil, wodurch auch das Sitzventil öffnet, um die Förderleitung der Pumpe wieder zum Behälter zu entlasten (Figur 3).

Der vorliegenden Erfindung liegt die Aufgabe zugrunde, ein hydrostatisches Antriebssystem mit einem Freigabeventil der eingangs genannten Gattung zur Verfügung zu stellen, die hinsichtlich möglicher Leckagen des Lastdruckes verbessert ist und zuverlässig eine Entlastung des Lastdruckes ermöglicht.

Diese Aufgabe wird erfindungsgemäß dadurch gelöst, dass das Freigabeventil als doppeltes Druckbegrenzungsventil in Sitzventilbauweise ausgebildet ist, das einen ersten, einen Ventilsitz des Lastdruckanschlusses ansteuernden Ventilsitzkörper und einen zweiten, einen Ventilsitz des Steuerdruckanschlusses ansteuernden Ventilsitzkörper aufweist, wobei an dem ersten Ventilsitzkörper eine von dem im Lastdruckanschluss anstehenden Lastdruck beaufschlagte Steuerfläche ausgebildet ist, die den ersten Ventilsitzkörper in die Entlastungsstellung beaufschlagt, in der der Lastdruckanschluss zu einem Tankanschluss entlastet ist, und an dem zweiten Ventilsitzkörper eine von dem im Steuerdruckanschluss anstehenden Steuerdruck beaufschlagte Steuerfläche ausgebildet ist, die den zweiten Ventilsitzkörper in die Entlastungsstellung beaufschlagt, in der der Steuerdruckanschluss zu einem Tankanschluss entlastet ist. Ein als doppeltes Druckbegrenzungsventil in Sitzventilbauweise ausgebildetes Freigabeventil zur Steuerung des Steuerdruckanschluss und des Lastdruckanschluss ermöglicht es auf einfache Weise, über die Lebensdauer verringerte Leckagen, insbesondere an dem Lastdruckanschluss, zu erzielen, um über die Lebensdauer des mit dem erfindungsgemäßen Freigabeventils versehenen Antriebssystems den maximalen und gewünschten Systemdruck und somit die Leistungsfähigkeit der Arbeitshydraulik aufrechtzuerhalten. Darüber hinaus können durch die Sitzventilbauweise die Spaltmaße vergrößert werden, wodurch sich der Bauaufwand für das erfindungsgemäße Freigabeventil verringern lässt. Der Bauaufwand für das erfindungsgemäße Freigabeventil verringert sich weiterhin dadurch, dass die Ventilsitzkörper einen einfachen Aufbau ohne Steuerausnehmungen aufweisen. Ein wesentlicher Vorteil des als doppeltes Druckbegrenzungsventil in Sitzventilbauweise ausgebildeten Freigabeventils besteht darin, dass an jedem Ventilsitzkörper eine von dem abzusichernden Druck beaufschlagte Steuerfläche erzeugt werden kann, an denen für jeden Ventilsitzkörper eine entsprechend große Rückstellkraft erzeugt wird, um durch Öffnen des Ventilsitzes den jeweiligen Druck zum Behälter abzubauen. Mit dem erfindungsgemäßen Freigabeventil kann somit die Abschaltung und Entlastung des Steuerdruckes und vor allem die Abschaltung und Entlastung des Lastdruckes zum Behälter mit einer hohen Zuverlässigkeit erzielt werden. Mit dem erfindungsgemäßen Freigabeventil kann in einem hydrostatischen Antriebssystem in funktionssicherer Weise und bei geringem Bauaufwand für das Freigabeventil in der Funktionsstellung des Freigabeventils die Freigabe der Verbraucherbewegungen erzielt werden und eine zuverlässige Abschaltung des die Vorsteuerventile versorgenden Steuerdrucks sowie des die Förderstromregeleinrichtung ansteuernden Lastdruckes zu einem Behälter in der Entlastungsstellung des Freigabeventils erzielt werden.

Gemäß einer vorteilhaften Ausführungsform der Erfindung sind die beiden Ventilsitzkörper koaxial angeordnet und ineinander geführt. Hierdurch lässt sich ein konstruktiv einfacher Aufbau und ein geringer Bauraumbedarf des erfindungsgemäßen Freigabeventils erzielen.

Besondere Vorteile ergeben sich, wenn gemäß einer Ausgestaltungsform der Erfindung der zweite Ventilsitzköper in einer Gehäusebohrung angeordnet ist, an der der von dem zweiten Ventilsitzkörper angesteuerter Ventilsitz des Steuerdruckanschluss ausgebildet ist, und der erste Ventilsitzkörper innerhalb des zweiten Ventilsitzkörpers angeordnet ist, wobei der von dem ersten Ventilsitzkörper angesteuerte Ventilsitz des Lastdruckanschlusses an der Gehäusebohrung ausgebildet ist. An dem zweiten Ventilsitz des Steuerdruckanschluss und zwischen der Gehäusebohrung und dem zweiten Ventilsitz können zur Verringerung des Bauaufwandes größere Spaltmaße zugelassen werden, da mögliche Leckagen des an dem Steuerdruckanschluss anstehenden Steuerdrucks durch eine Verringerung des Steuerdrucks, der die Vorsteuerventile versorgt, die aus dem Steuerdruck einen Ansteuerduck zur Betätigung des Steuerwegeventils erzeugen, lediglich zu einer Verlangsamung der Funktionsgeschwindigkeit des angesteuerten Verbrauchers führen, jedoch keine geringeren Kräfte von dem Verbraucher erzeugt werden, so dass die Leistungsfähigkeit der Arbeitshydraulik der Arbeitsmaschine erhalten bleibt.

Zweckmäßigerweise ist gemäß einer vorteilhaften Ausgestaltungsform der Erfindung zwischen den beiden Ventilsitzen der Tankanschluss angeordnet. Hierdurch wird der Bauaufwand und Bauraumbedarf des erfindungsgemäßen Freigabeventils weiter verringert, da für die Entlastung des Steuerdrucks und des Lastdruckes zu einem Behälter lediglich ein einziger Tankanschluss erforderlich ist.

Hinsichtlich eines einfachen und kostengünstigen Aufbaus des erfindungsgemäßen Freigabeventils ergeben sich weitere Vorteile, wenn gemäß einer Ausführungsform der Erfindung der erste Ventilsitzkörper und/oder der zweite Ventilsitzkörper als Ventilsitzkegel mit einer den entsprechenden Ventilsitz ansteuernden Kegelfläche ausgebildet ist. Derartige Ventilsitzkegel können mit geringem Bauaufwand hergestellt werden und ermöglichen es auf einfache Weise an dem Ventilsitzkörper im Bereich der jeweiligen Kegelfläche eine von dem zugeordneten Druck beaufschlagte Steuerfläche zur Verfügung zu stellen.

Mit besonderem Vorteil sind gemäß einer Weiterbildung der Erfindung der erste Ventilsitzkörper und der zweite Ventilsitzkörper mittels einer Betätigungseinrichtung gemeinsam betätigbar. Hierdurch lässt sich der Bauaufwand und der Bauraumbedarf weiter verringern, da für die Betätigung der beiden Ventilsitzkörper lediglich eine einzige Betätigungseinrichtung erforderlich ist.

Gemäß einer zweckmäßigen Ausgestaltung der Erfindung ist die Betätigungseinrichtung als Elektromagnet, insbesondere Schaltmagnet, ausgebildet, wobei bei einer Ansteuerung des Elektromagneten das Freigabeventil in die Funktionsstellung betätigt ist, in der der erste Ventilsitzkörper den Ventilsitz des Lastdruckanschlusses absperrt und der zweite Ventilsitzkörper den Ventilsitz des Steuerdruckanschlusses absperrt. Mit einem Elektromagnet kann auf einfache Weise bei dessen Bestromung das Freigabeventil in die Funktionsstellung betätigt werden, um die Verbraucherbewegungen freizugeben, und bei nicht bestromten Elektromagnet das Freigabeventil in die Entlastungsstellung betätigt werden, in der die Ventilsitze geöffnet sind und der Steuerdruck sowie der Lastdruck zum Behälter entlastet sind.

Der Elektromagnet weist gemäß einer Ausgestaltungsform der Erfindung einen Betätigungsstößel auf, der mit dem ersten Ventilsitzkörper in Wirkverbindung steht. Hierdurch kann eine direkte Betätigung des den Lastdruckanschluss ansteuernden Ventilkörpers durch die Betätigung des Elektromagneten erzielt werden.

Der Elektromagnet weist gemäß einer alternativen, besonders vorteilhaften Ausgestaltungsform der Erfindung einen Betätigungsstößel auf, an dem der erste Ventilsitzkörper ausgebildet ist. Der erste Ventilsitzkörper ist somit direkt an dem Betätigungsstößel des Elektromagneten angeordnet, wodurch insbesondere bei einer Ausführung des ersten Ventilsitzkörpers als Ventilsitzkegel ein einfacher und kostengünstiger Aufbau erzielbar ist.

Gemäß einer vorteilhaften Ausgestaltungsform der Erfindung ist zwischen dem ersten Ventilsitzkörper bzw. dem Betätigungsstößel und dem zweiten Ventilsitzkörper eine Federeinrichtung angeordnet. Bei einer Betätigung des Betätigungsstößels des Elektromagneten und somit einer direkten Betätigung des ersten Ventilkörpers kann über eine zwischen dem ersten Ventilsitzkörper bzw. dem Betätigungsstößel und dem zweiten Ventilsitzkörper angeordnete Federeinrichtung auf einfache Weise der zweite Ventilsitzkörper betätigt werden.

Gemäß einer Weiterbildung der Erfindung ist der Elektromagnet mit einer Hubüberwachung zur Überwachung der Bewegung des Betätigungsstößels versehen ist. Mit einer derartigen Überwachung kann auf einfache Weise die Bewegung des Betätigungsstößels und somit die Funktionsweise des Elektromagneten und des Freigabeventils überwacht werden und im Fehlerfall ein entsprechendes Fehlersignal ausgegeben werden.

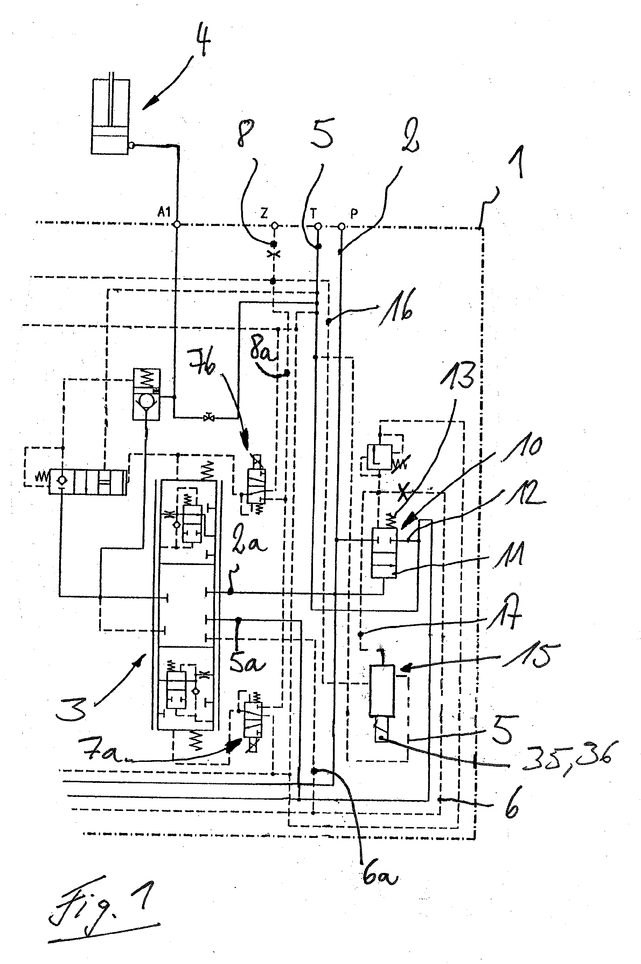

Weitere Vorteile und Einzelheiten der Erfindung werden anhand des in den schematischen Figuren dargestellten Ausführungsbeispiels näher erläutert. Hierbei zeigt
- Figur 1: einen Schaltplan eines Antriebssystems mit einem erfindungsgemäßen Freigabeventil und

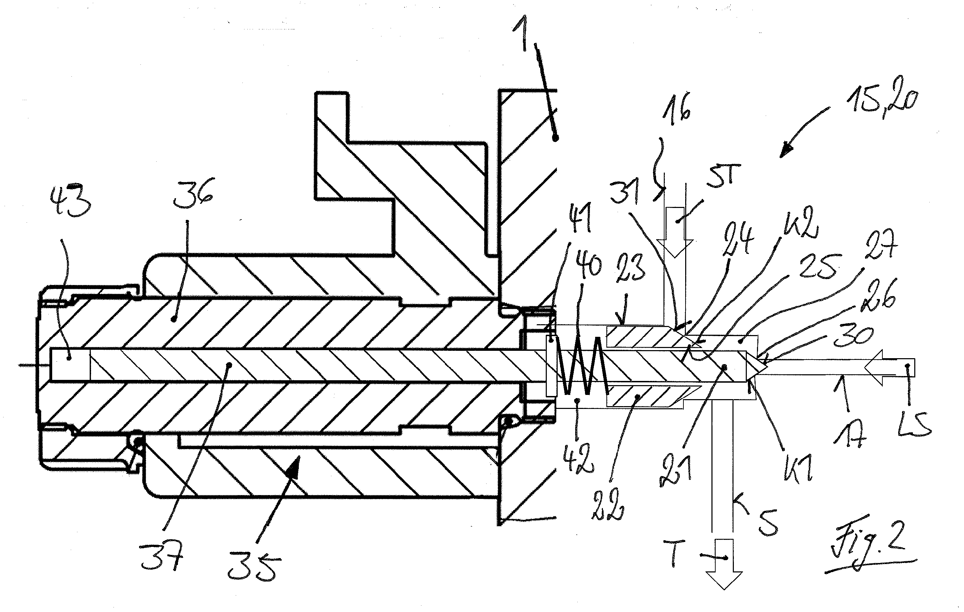

- Figur 2: das erfindungsgemäße Freigabeventil in einem Längsschnitt.

In der Figur 1 ist ein als Arbeitshydraulik einer Arbeitsmaschine, beispielsweise eines Flurförderzeugs, einer Baumaschine, einer Forstmaschine, einer Landmaschine oder einer Kommunalmaschine, ausgebildetes Antriebssystem gezeigt. Dargestellt ist eine als Steuerventilblock ausgebildete Steuerventileinrichtung 1, die am Anschluss P mit einer Förderleitung einer nicht näher darstellten Hydraulikpumpe und am Anschluss T an eine zu einem Behälter geführte Behälterleitung angeschlossen ist. Der Anschluss P steht in der Steuerventileinrichtung 1 mit einer Förderleitung 2 in Verbindung, an die mittels einer Förderzweigleitung 2a ein Steuerwegeventil 3 zur Steuerung eines Verbrauchers 4 der Arbeitshydraulik angeschlossen ist. Der Anschluss T steht in der Steuerventileinrichtung 1 mit einer Behälterleitung 5 in Verbindung, an die mittels einer Tankzweigleitung 5a das Steuerwegeventil 3 angeschlossen ist. Das Steuerwegeventil 3 ist als Load-Sensing-Wegeventil ausgebildet, wobei bei einer Ansteuerung des Steuerwegeventils 3 und somit einer Betätigung des Verbrauchers 5 der Lastdruck des Verbrauchers 5 über eine Lastdruckzweigleitung 6a in eine Lastdruckmeldeleitung 6 des Antriebsystems gemeldet wird.

Das Steuerwegeventil 3 ist elektro-hydraulisch betätigbar. Hierzu sind zur Betätigung des Steuerwegeventils 3 elektrisch betätigbare Vorsteuerventile 7a, 7b vorgesehen. Die Vorsteuerventile 7a, 7b sind beispielsweise als mittels eines Proportionalmagneten betätigbare Druckminderventile ausgebildet. Die Vorsteuerventile 7a, 7b stehen eingangsseitig zur Versorgung mit einem Steuerdruck mittels einer Steuerdruckzweigleitung 8a mit einer Steuerdruckleitung 8 der Steuerventileinrichtung 1 in Verbindung, die an einen Anschluss Z der Steuerventileinrichtung 1 geführt ist, an den eine Steuerdruckversorgungsquelle angeschlossen ist. Bei einer Betätigung erzeugen die Vorsteuerventile 7a, 7b aus dem in der Steuerdruckleitung anstehenden Steuerdruck einen Ansteuerduck, der das Steuerwegeventil 3 in eine entsprechende Steuerstellung zur Betätigung des Verbrauchers 4 beaufschlagt.

In dem dargestellten Ausschnitt der Steuerventileinrichtung 1 ist lediglich ein Steuerwegeventil 3 dargestellt. Es versteht sich, dass die Steuerventileinrichtung 1 weitere Steuerwegeventile zur Steuerung weiterer Verbraucher der Arbeitshydraulik enthalten kann, die entsprechend mittels jeweils einer Förderzweigleitung an die Förderleitung 2, mittels einer Behälterzweigleitung an die Behälterleitung 5 sowie einer Lastdruckzweigleitung an die Lastdruckmeldeleitung 6 angeschlossen sind sowie mittels elektrisch betätigbarer Vorsteuerventile, die eingangsseitig an die Steuerdruckleitung 8 angeschlossen sind, betätigbar sind.

Die Lastdruckmeldeleitung 6 ist an eine Förderstromregeleinrichtung 10 der Steuerventileinrichtung 1 geführt. Die Förderstromregeleinrichtung 10 ist als Eingangsdruckwaage 11 ausgebildet, die in einer die Förderleitung 2 mit der Behälterleitung 5 verbindenden Verbindungsleitung 12 angeordnet ist. Die Eingangsdruckwaage 11 ist hierbei in Richtung einer Sperrstellung von dem in der Lastdruckmeldeleitung 6 anstehenden Lastdruck der Verbraucher und einer Feder 13 beaufschlagbar. In Richtung einer Durchflussstellung ist die Eingangsdruckwaage 11 von dem in der Förderleitung 2 anstehenden Förderdruck beaufschlagbar.

Die Steuerventileinrichtung 1 weist zur Freigabe der Steuerwegeventile 3 und der entsprechenden Bewegungen der Verbraucher ein Freigabeventil 15 auf. Das Freigabeventil 15 ist eingangsseitig an eine von der Steuerdruckversorgungsleitung 8 abzweigenden Steuerdruckzweigleitung 16 und an eine von der Lastdruckmeldeleitung 6 abzweigende Lastdruckmeldezweigleitung 17 angeschlossen. Ausgangsseitig steht das Freigabeventil 15 mit der Behälterleitung 5 in Verbindung.

Das Freigabeventil 15 weist eine Funktionsstellung und eine Entlastungsstellung auf.

In der Entlastungsstellung sind die Lastdruckmeldezweigleitung 17 und die Steuerdruckzweigleitung 16 an die Behälterleitung 5 angeschlossen. Durch die Verbindung der Steuerdruckzweigleitung 16 mit der Behälterleitung 5 werden die Verbraucher still gesetzt bzw. deren Betrieb durch Ansteuerung der entsprechenden Vorsteuerventile unmöglich gemacht. Durch die Verbindung der Lastdruckmeldezweigleitung 17 mit der Behälterleitung 5 wird die Förderstromregeleinrichtung 10 von dem in der Förderleitung 2 anstehenden Förderduck in die Durchflussstellung beaufschlagt, so dass der Förderdruck in der Förderleitung 2 zum Behälter abgebaut wird.

In der Funktionsstellung sind die Lastdruckmeldezweigleitung 17 und die Steuerdruckzweigleitung 16 abgesperrt. Dadurch sind die Verbraucher freigegeben, so dass bei einer Ansteuerung der Vorsteuerventile die Steuerwegeventile zur Betätigung der Verbraucher angesteuert werden können und die Förderstromregeleinrichtung 10 von dem Förderdruck und dem höchsten Lastdruck gesteuert ist.

In der Figur 2 ist ein erfindungsgemäßes Freigabeventil 15 in einem Längsschnitt dargestellt.

Das erfindungsgemäße Freigabeventil 15 ist als doppeltes Druckbegrenzungsventil 20 in Sitzventilbauweise ausgebildet ist, das zwei koaxial angeordnete und ineinander und somit in sich geführte Ventilsitzkörper 21, 22 umfasst.

Der erste Ventilsitzkörper 21 des Freigabeventils 15 steuert einen Lastdruckanschluss LS des Freigabeventils 15 an, der mit der Lastdruckmeldezweigleitung 17 der Figur 1 in Verbindung steht. Der zweite Ventilsitzkörper 22 des Freigabeventils 15 steuert einen Steuerdruckanschluss ST an, der mit der Steuerdruckzweigleitung 16 der Figur 1 in Verbindung steht.

Der zweite Ventilsitzköper 22 bildet den radial äußeren Ventilsitzkörper, der in einer Gehäusebohrung 23 der Steuerventileinrichtung 1 oder eines separaten Gehäuses des Freigabeventils 15 längsverschiebbar angeordnet ist. An der Gehäusebohrung 23 ist ein von dem zweiten Ventilsitzkörper 22 angesteuerter Ventilsitz 24 des Steuerdruckanschluss ST ausgebildet. Der erste Ventilsitzkörper 21 bildet den radial inneren Ventilsitzkörper. Der erste Ventilsitzkörper 21 ist innerhalb des zweiten Ventilsitzkörpers 22 längsverschiebbar angeordnet. Der zweite Ventilsitzkörper 22 ist hierzu mit einer Längsbohrung 25 versehen, durch die sich der erste Ventilsitzkörper 21 hindurcherstreckt und in der der Ventilsitzkörper 21 geführt ist. Der erste Ventilsitzkörper 21 steuert einen an der Gehäusebohrung 23 ausgebildeten Ventilsitz 26 des Lastdruckanschluss LS an.

Der erste Ventilsitzkörper 21 und der zweite Ventilsitzkörper 22 sind jeweils als Ventilsitzkegel mit einer den entsprechenden Ventilsitz 24, 26 ansteuernden Kegelfläche K1, K2 ausgebildet sind.

Der Bereich der Gehäusebohrung 23 zwischen den beiden, in Längsrichtung der Gehäusebohrung 23 voneinander beabstandet angeordneten Ventilsitzen 24, 26 ist als Tankraum 27 ausgebildet und mit einem Tankanschluss T versehen, der mit der Behälterleitung 5 in Verbindung steht.

An dem ersten Ventilsitzkörper 21 ist an der Kegelfläche K1 eine von dem im Lastdruckanschluss LS anstehenden Lastdruck beaufschlagte Steuerfläche 30 ausgebildet ist, die den ersten Ventilsitzkörper 21 in eine Entlastungsstellung beaufschlagt, in der der von dem Ventilsitzkörper 21 angesteuerte Ventilsitz 26 geöffnet ist und der Lastdruckanschluss LS zu dem Tankanschluss T entlastet ist.

An dem zweiten Ventilsitzkörper 22 ist an der Kegelfläche K2 eine von dem im Steuerdruckanschluss ST anstehenden Steuerdruck beaufschlagte Steuerfläche 31 ausgebildet, die den zweiten Ventilsitzkörper 22 in eine Entlastungsstellung beaufschlagt, in der der von dem Ventilsitzkörper 22 angesteuerte Ventilsitz 24 geöffnet ist der Steuerdruckanschluss ST zu dem Tankanschluss T entlastet ist.

Der erste Ventilsitzkörper 21 und der zweite Ventilsitzkörper 22 sind mittels einer Betätigungseinrichtung 35 gemeinsam betätigbar.

Die Betätigungseinrichtung 35 ist im dargestellten Ausführungsbeispiel als Elektromagnet 36, insbesondere Schaltmagnet, ausgebildet. Bei einer Ansteuerung des Elektromagneten 36 wird das Freigabeventil 15 in eine Funktionsstellung betätigt ist, in der der erste Ventilsitzkörper 21 den Ventilsitz 26 des Lastdruckanschlusses LS absperrt und der zweite Ventilsitzkörper 22 den Ventilsitz 24 des Steuerdruckanschlusses ST absperrt.

Der Elektromagnet 36 weist einen längsbeweglichen Betätigungsstößel 37 auf, der zur Betätigung mit dem ersten Ventilsitzkörper 21 in Wirkverbindung steht. Im dargestellten Ausführungsbeispiel ist der Betätigungsstößel 37 und der erste Ventilsitzkörper 21 einstückig ausgebildet, wozu der Betätigungsstößel 37 an der Spitze mit der den Ventilsitz 26 des Lastdruckanschlusses LS ansteuernden Kegelfläche K1 versehen ist.

Zur Betätigung des zweiten Ventilsitzkörpers 22 bei einer Ansteuerung des Elektromagneten 36 ist zwischen dem ersten Ventilsitzkörper 21 bzw. dem Betätigungsstößel 37 und dem zweiten Ventilsitzkörper 22 eine Federeinrichtung 40 angeordnet. Die Federeinrichtung 40 ist im dargestellten Ausführungsbeispiel an der der Kegelfläche K2 gegenüberliegenden Stirnseite des zweiten Ventilsitzkörpers 22 und an einem Federteller 41 abgestützt, der an dem Betätigungsstößel 37 bzw. dem ersten Ventilsitzkörper 21 angeordnet ist. Die Federeinrichtung 40 ist bevorzugt als Druckfeder ausgebildet. Der zwischen der Betätigungseinrichtung 35, der Gehäusebohrung 23 und den beiden Ventilsitzkörpern 21, 22 gebildete Raum 42, in dem die Federeinrichtung 41 angeordnet ist, ist auf nicht näher dargestellte Weise zu dem Behälter entlastet.

Zudem ist ein zwischen dem Betätigungsstößel 37 und dem Elektromagnet 36 ausgebildeter Raum 43, der dem Ventilsitzkörper 21 gegenüberliegt, auf nicht näher dargestellte Weise zu dem Behälter entlastet.

Das erfindungsgemäße Freigabeventil 15 weist eine Reihe von Vorteilen auf.

Das Freigabeventil 15 weist durch die Bauweise als Druckbegrenzungsventils 20 mit zwei Ventilsitzkörpern 21, 22, die bevorzugt als Ventilsitzkegel ausgebildet sind, einen einfachen und kostengünstigen Aufbau auf.

An den Steuerflächen 30, 31 stehen aus dem entsprechende Lastdruck LS bzw. Steuerdruck ST große Rückstellkräfte an, die den entsprechenden Ventilsitzkörper 21, 22 bei nicht angesteuerten Betätigungseinrichtung 35 in eine Öffnungsstellung und somit die Entlastungsstellung zum Entlasten und Abschalten des Lastdruckes LS bzw. des Steuerdruckes ST zum Behälter ermöglichen. Bei dem erfindungsgemäßen Freigabeventil 15 erfolgt insbesondere mittels der Steuerfläche 30 an dem ersten Ventilsitzkörper 21 eine sicher und zuverlässige Abschaltung des Lastdruckes LS zum Behälter, wobei an der Steuerfläche 30 der Lastdruck LS als eindeutige und hohe Stellkraft auf den ersten Ventilsitzkörper 21 in Öffnungsrichtung des Ventilsitzes 26 wirkt. Weiterhin können an dem zweiten Ventilsitzkörper 23 die Spaltmaße zur Gehäusebohrung 23 vergrößert werden, wodurch eine weitere Verringerung des Herstellaufwandes des erfindungsgemäßen Freigabeventils 15 ermöglicht wird.

Ein weiterer Vorteil des als Druckbegrenzungsventil 20 in Sitzventilbauweise ausgebildeten Freigabeventils 15 besteht darin, dass bei gleichem Bauraum gegenüber bekannten Freigabeventilen in Längsschieberbauweise vergrößerte Zu-und Abströmquerschnitte zur Verfügung gestellt werden können, die zu einer weiteren Verbesserung der Funktionsweise des erfindungsgemäßen Freigabeventils 15 führen, da ungewollte Staudrücke vermieden werden können.

## Patentansprüche

1. Hydrostatisches Antriebssystem mit zumindest einem Steuerwegeventil (3) zur Steuerung eines Verbrauchers (4), das von einem Steuerdruck betätigbar ist, und einer Förderstromregeleinrichtung (10), die von einem Lastdruck gesteuert ist, und mit einem Freigabeventil (15), wobei das Freigabeventil (15) die Beaufschlagung des Steuerwegeventils (3) mit dem Steuerdruck und die Beaufschlagung der Förderstromregeleinrichtung (10) mit dem Lastdruck steuert, wobei das Freigabeventil (15) einen Steuerdruckanschluss (ST) und einen Lastdruckanschluss (LS) ansteuert, wobei das Freigabeventil (15) eine Funktionsstellung und eine Entlastungsstellung aufweist, **dadurch gekennzeichnet, dass** das Freigabeventil (15) als doppeltes Druckbegrenzungsventil (20) in Sitzventilbauweise ausgebildet ist, das einen ersten, einen Ventilsitz (26) des Lastdruckanschlusses (LS) ansteuernden Ventilsitzkörper (21) und einen zweiten, einen Ventilsitz (24) des Steuerdruckanschlusses (ST) ansteuernden Ventilsitzkörper (22) aufweist, wobei an dem ersten Ventilsitzkörper (21) eine von dem im Lastdruckanschluss (LS) anstehenden Lastdruck beaufschlagte Steuerfläche (30) ausgebildet ist, die den ersten Ventilsitzkörper (21) in die Entlastungsstellung beaufschlagt, in der der Lastdruckanschluss (LS) zu einem Tankanschluss (T) entlastet ist, und an dem zweiten Ventilsitzkörper (22) eine von dem im Steuerdruckanschluss (ST) anstehenden Steuerdruck beaufschlagte Steuerfläche (31) ausgebildet ist, die den zweiten Ventilsitzkörper (22) in die Entlastungsstellung beaufschlagt, in der der Steuerdruckanschluss (ST) zu einem Tankanschluss (T) entlastet ist.

2. Hydrostatisches Antriebssystem nach Anspruch 1, **dadurch gekennzeichnet, dass** die beiden Ventilsitzkörper (21, 22) koaxial angeordnet sind und ineinander geführt sind.

3. Hydrostatisches Antriebssystem nach Anspruch 1 oder 2, **dadurch gekennzeichnet, dass** der zweite Ventilsitzköper (22) in einer Gehäusebohrung (23) angeordnet ist, an der der von dem zweiten Ventilsitzkörper (22) angesteuerter Ventilsitz (24) des Steuerdruckanschluss (ST) ausgebildet ist, und der erste Ventilsitzkörper (21) innerhalb des zweiten Ventilsitzkörpers (22) angeordnet ist, wobei der von dem ersten Ventilsitzkörper (21) angesteuerte Ventilsitz (26) des Lastdruckanschlusses (LS) an der Gehäusebohrung (23) ausgebildet ist.

4. Hydrostatisches Antriebssystem nach einem der Ansprüche 1 bis 3, **dadurch gekennzeichnet, dass** zwischen den beiden Ventilsitzen (24, 26) der Tankanschluss (T) angeordnet ist.

5. Hydrostatisches Antriebssystem nach einem der Ansprüche 1 bis 4, **dadurch gekennzeichnet, dass** der erste Ventilsitzkörper (21) und/oder der zweite Ventilsitzkörper (22) als Ventilsitzkegel mit einer den entsprechenden Ventilsitz (26; 24) ansteuernden Kegelfläche (K1; K2) ausgebildet ist.

6. Hydrostatisches Antriebssystem nach einem der Ansprüche 1 bis 5, **dadurch gekennzeichnet, dass** der erste Ventilsitzkörper (21) und der zweite Ventilsitzkörper (22) mittels einer Betätigungseinrichtung (35) gemeinsam betätigbar sind.

7. Hydrostatisches Antriebssystem nach Anspruch 6, **dadurch gekennzeichnet, dass** die Betätigungseinrichtung (35) als Elektromagnet (36), insbesondere Schaltmagnet, ausgebildet ist, wobei bei einer Ansteuerung des Elektromagneten (36) das Freigabeventil (15) in die Funktionsstellung betätigt ist, in der der erste Ventilsitzkörper (21) den Ventilsitz (26) des Lastdruckanschlusses (LS) absperrt und der zweite Ventilsitzkörper (22) den Ventilsitz (24) des Steuerdruckanschlusses (ST) absperrt.

8. Hydrostatisches Antriebssystem nach Anspruch 7, **dadurch gekennzeichnet, dass** der Elektromagnet (36) einen Betätigungsstößel (37) aufweist, der mit dem ersten Ventilsitzkörper (21) in Wirkverbindung steht.

9. Hydrostatisches Antriebssystem nach Anspruch 7, **dadurch gekennzeichnet, dass** der Elektromagnet (36) einen Betätigungsstößel (37) aufweist, an dem der erste Ventilsitzkörper (21) ausgebildet ist.

10. Hydrostatisches Antriebssystem nach einem der Ansprüche 1 bis 9, **dadurch gekennzeichnet, dass** zwischen dem ersten Ventilsitzkörper (21) bzw. dem Betätigungsstößel (37) und dem zweiten Ventilsitzkörper (22) eine Federeinrichtung (40) angeordnet ist.

11. Hydrostatisches Antriebssystem nach einem der Ansprüche 7 bis 10, **dadurch gekennzeichnet, dass** der Elektromagnet (36) mit einer Hubüberwachung zur Überwachung der Bewegung des Betätigungsstößels (37) versehen ist.

## Claims

1. Hydrostatic drive system having at least one directional control valve (3) for controlling a consumer (4) which can be activated by a control pressure, and a feed current regulating device (10) which is controlled by a load pressure, and having a release valve (15), wherein the release valve (15) controls the application of the control pressure to the directional control valve (3) and the application of the load pressure to the current regulating device (10), wherein the release valve (15) actuates a control pressure connection (ST) and a load pressure connection (LS), wherein the release valve (15) has a functional position and a relief position, **characterized in that** the release valve (15) is embodied as a double pressure-limiting valve (20) which is of a poppet valve design and has a first valve seat body (21) which actuates a valve seat (26) of the load pressure connection (LS) and a second valve seat body (22) which actuates a valve seat (24) of the control pressure connection (ST), wherein a control face (30) to which the load pressure which is present in the load pressure connection (LS) is applied is formed on the first valve seat body (21) and loads the first valve seat body (21) into the relief position in which the load pressure connection (LS) to a tank connection (T) is relieved, and a control face (31) to which the control pressure which is present in the control pressure connection (ST) is applied is formed on the second valve seat body (22) and loads the second valve seat body (22) into the relief position in which the control pressure connection (ST) to a tank connection (T) is relieved.

2. Hydrostatic drive system according to Claim 1, **characterized in that** the two valve seat bodies (21, 22) are arranged coaxially and are guided one in the other.

3. Hydrostatic drive system according to Claim 1 or 2, **characterized in that** the second valve seat body (22) is arranged in a housing bore (23), on which the valve seat (24), actuated by the second valve seat body (22), of the control pressure connection (ST) is formed, and the first valve seat body (21) is arranged within the second valve seat body (22), wherein the valve seat (26), actuated by the first valve seat body (21), of the load pressure connection (LS) is formed on the housing bore (23).

4. Hydrostatic drive system according to one of Claims 1 to 3, **characterized in that** the tank connection (T) is arranged between the two valve seats (24, 26).

5. Hydrostatic drive system according to one of Claims 1 to 4, **characterized in that** the first valve seat body (21) and/or the second valve seat body (22) are/is embodied as a valve seat cone with a conical face (K1; K2) which actuates the corresponding valve seat (26; 24).

6. Hydrostatic drive system according to one of Claims 1 to 5, **characterized in that** the first valve seat body (21) and the second valve seat body (22) can be activated together by means of an activation device (35).

7. Hydrostatic drive system according to Claim 6, **characterized in that** the activation device (35) is embodied as an electromagnet (36), in particular as a switching magnet, wherein when the electromagnet (36) is actuated the release valve (15) is activated into the functional position in which the first valve seat body (21) shuts off the valve seat (26) of the load pressure connection (LS), and the second valve seat body (22) shuts off the valve seat (24) of the control pressure connection (ST).

8. Hydrostatic drive system according to Claim 7, **characterized in that** the electromagnet (36) has an activation plunger (37) which is operatively connected to the first valve seat body (21).

9. Hydrostatic drive system according to Claim 7, **characterized in that** the electromagnet (36) has an activation plunger (37) on which the first valve seat body (21) is formed.

10. Hydrostatic drive system according to one of Claims 1 to 9, **characterized in that** a spring device (40) is arranged between the first valve seat body (21) or the activation plunger (37) and the second valve seat body (22).

11. Hydrostatic drive system according to one of Claims 7 to 10, **characterized in that** the electromagnet (36) is provided with a stroke monitoring means for monitoring the movement of the activation plunger (37).

## Revendications

1. Système d'entraînement hydrostatique présentant au moins une soupape pilote (3) à une voie qui commande un consommateur (4) et qui peut être actionnée par une pression pilote, un dispositif (10) de régulation de l'écoulement de transport qui est commandé par une charge en pression et une soupape de libération (15), la soupape de libération (15) commandant l'application de la pression pilote sur la soupape pilote (3) à une voie et l'application de la pression de charge sur le dispositif (10) de régulation de l'écoulement de transport,
la soupape de libération (15) commandant un raccordement (ST) à la pression pilote et un raccordement (LS) à la pression de charge,
la soupape de libération (15) présentant une position fonctionnelle et une position de délestage, **caractérisé en ce que**
la soupape de libération (15) est configurée comme double soupape (20) de limitation de pression à structure de soupape à siège qui présente un premier corps (21) de siège de soupape qui commande un siège de soupape (26) du raccordement (LS) à la pression de charge et un deuxième corps (22) de siège de soupape qui commande un siège de soupape (24) du raccordement (ST) à la pression pilote,
**en ce qu'**une surface pilote (30) sur laquelle est appliquée la pression de charge qui prévaut dans le raccordement (LS) à la pression de charge et qui sollicite le premier corps (21) de siège de soupape dans la position de délestage dans laquelle le raccordement (LS) à la pression de charge est délesté vers un raccordement (T) au réservoir est formée sur le premier corps (21) de siège de soupape et
**en ce qu'**une surface pilote (31) sur laquelle est appliquée la pression pilote qui prévaut dans le raccordement (LS) à la pression pilote et qui sollicite le deuxième corps (22) de siège de soupape dans la position de délestage dans laquelle le raccordement (LS) à la pression pilote est délesté vers un raccordement (T) au réservoir est formée sur le deuxième corps (22) de siège de soupape.

2. Système hydrostatique d'entraînement selon la revendication 1, **caractérisé en ce que** les deux corps (21, 22) de siège de soupape sont disposés coaxialement et passent l'un dans l'autre.

3. Système hydrostatique d'entraînement selon les revendications 1 ou 2, **caractérisé en ce que** le deuxième corps (22) de siège de soupape est disposé dans un alésage de boîtier (23) sur lequel est formé le siège de soupape (24) du raccordement (ST) à la pression pilote, commandé par le deuxième corps (22) de siège de soupape et le premier corps (21) de siège de soupape est disposé à l'intérieur du deuxième corps (22) de siège de soupape, le siège de soupape (26) du raccordement (LS) à la pression de charge, commandé par le premier corps (21) de siège de soupape, étant formé sur l'alésage de boîtier (23).

4. Système hydrostatique d'entraînement selon l'une des revendications 1 à 3, **caractérisé en ce que** le raccordement (T) au réservoir est disposé entre les deux sièges de soupape (24, 26).

5. Système hydrostatique d'entraînement selon l'une des revendications 1 à 4, **caractérisé en ce que** le premier corps (21) de siège de soupape et/ou le deuxième corps (22) de siège de soupape sont configurés comme cônes de siège de soupape présentant une surface conique (K1; K2) qui commande le siège de soupape (26; 24) concerné.

6. Système hydrostatique d'entraînement selon l'une des revendications 1 à 5, **caractérisé en ce que** le premier corps (21) de siège de soupape et le deuxième corps (22) de siège de soupape peuvent être actionnés conjointement au moyen d'un dispositif d'actionnement (35).

7. Système hydrostatique d'entraînement selon la revendication 6, **caractérisé en ce que** le dispositif d'actionnement (35) est configuré comme électroaimant (36) et en particulier comme aimant de commutation, dans lequel lors d'une commande de l'électroaimant (36), la soupape de libération (15) est actionnée vers la position fonctionnelle dans laquelle le premier corps (21) de siège de soupape bloque le siège de soupape (26) du raccordement (LS) à la pression de charge et le deuxième corps (22) de siège de soupape bloque le siège de soupape (24) du raccordement (ST) à la pression pilote.

8. Système hydrostatique d'entraînement selon la revendication 7, **caractérisé en ce que** l'électroaimant (36) présente un poussoir d'actionnement (37) qui coopère fonctionnellement avec le premier corps (21) de siège de soupape.

9. Système hydrostatique d'entraînement selon la revendication 7, **caractérisé en ce que** l'électroaimant (36) présente un poussoir d'actionnement (37) sur lequel est formé le premier corps (21) de siège de soupape.

10. Système hydrostatique d'entraînement selon l'une des revendications 1 à 9, **caractérisé en ce qu'**un dispositif de ressort (40) est disposé entre le premier corps (21) de siège de soupape ou le poussoir d'actionnement (37) et le deuxième corps (22) de siège de soupape.

11. Système hydrostatique d'entraînement selon l'une des revendications 7 à 10, **caractérisé en ce que** l'électroaimant (36) est doté d'une surveillance de course qui surveille le déplacement du poussoir d'actionnement (37).
